# EUROPEAN PATENT APPLICATION

(11) **EP 0 584 701 A2**
(43) Date of publication of application: **02.03.1994**
(21) Application number: 93113178.3
(22) Date of filing: 17.08.1993
(51) Int. Cl.: G06K 9/64

(54) **Pattern matching circuit**

(30) Priority: 21.08.1992 JP 245657/92
(71) Applicant: YOZAN INC., Tokyo 155 (JP); SHARP KABUSHIKI KAISHA, Osaka 545 (JP)
(72) Inventor: Shou, Guoliang, Setagaya-ku, Tokyo 155 (JP); Takatori, Sunao, Setagaya-ku, Tokyo 155 (JP); Yamamoto, Makoto, Setagaya-ku, Tokyo 155 (JP)
(74) Representative: Grünecker, Kinkeldey, Stockmair & Schwanhäusser Anwaltssozietät

(57) **Abstract**

It purposes for this invention to provide a pattern matching circuit easily realizing LSI of normarized correlation function.

A pattern matching circuit consists of the first integrating means for calculating a sum 'Σfᵢ' of input data fᵢ, the second integrating means for calculating a sum 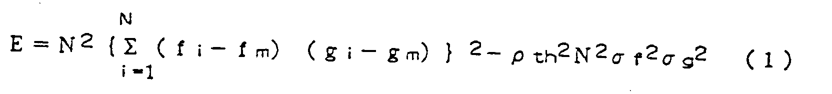
of squared input data, the third integrating means for calculating a sum 'Σfᵢ(gᵢ -gₘ)' of product fᵢ(gᵢ-gₘ) of a deviation (gᵢ-gₘ) corresponding to a mean gₘ of a template data gᵢ, and an input data fᵢ, a register registering a number of input data 'N', a mean of template data 'gₘ', a standard deviation of template data 'σ_{g}' and a data register R1 for registering a threshold value of correlation coefficient ρ, 'ρₜₕ' and a total operational means IC. A position of the maximum value of a correlation coefficient is roughly grasped by deciding a threshold value of a correlation oefficient beforhand.

## Description

### FIELD OF THE INVENTION

The present invention relates to a pattern matching circuit performing pattern matching based on a regular correlation function.

### BACKGROUND OF THE INVENTION

A pattern matching based on a normarized correlation coefficient is a very important processing for checking quality, and its high speed processing is also needed. On the other hand, the normarized correlation coefficient needs complicated calculations such as an integration of an input data and a template data and a division of the integrated result divided by a standard deviation. As a result, the necessity of LSI for the normarized correlation coefficient is high, however, conventionally, supply of LSI as a standard product has not been expected because it was not LSI expected large consumption.

### SUMMARY OF THE INVENTION

The present invention is invented so as to solve the conventional problems and has a purpose to provide a pattern matching circuit easily realized on LSI of a normarized correlation function.

A pattern matching circuit according to this invention sets up a threshold value of a correlation coefficient and evaluates Formula 1, 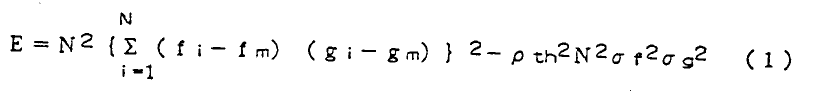
where N is a number of input data, fᵢ is an input data, fₘ is a mean value of input data, gᵢ is a template data, gₘ is a mean value of template data, ρₜₕ is a threshold value of a correlation function, σ_{f} is a standard deviation of input data, σ_{g} is a standard deviation of template data, in a range over threshold value.

### BRIEF DESCRIPTION OF THE DRAWINGS

Figure 1 is an input image.

Figure 2 is a template image.

Figure 3 is a block diagram of an embodiment of a pattern matching circuit according to the present invention.

### PREFERRED EMBODIMENT OF THE PRESENT INVENTION

Hereinafter, an embodiment of a pattern matching circuit according to this invention is described, citing an example of a pattern matching of an image.

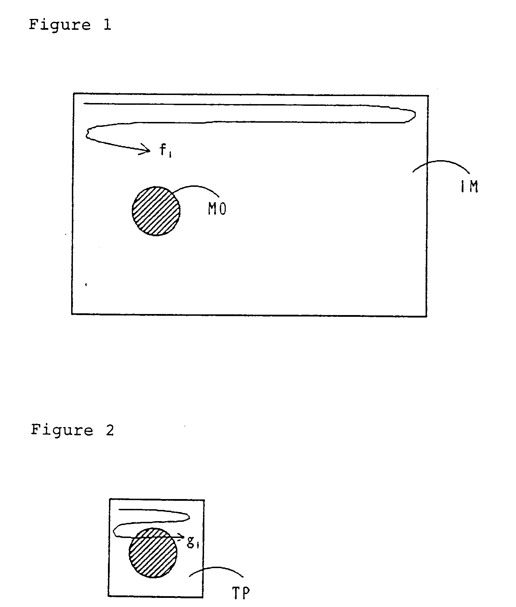

Figure 1 shows an input image IM including a matching object MO, and Figure 2 shows a template TP for detecting the matching object MO.

In the input image IM, each pixel fᵢ is inputted to a pattern matching circuit in the order of scanlines, and in response to it, a pixel gᵢ of the template TM is inputted to the pattern matching circuit.

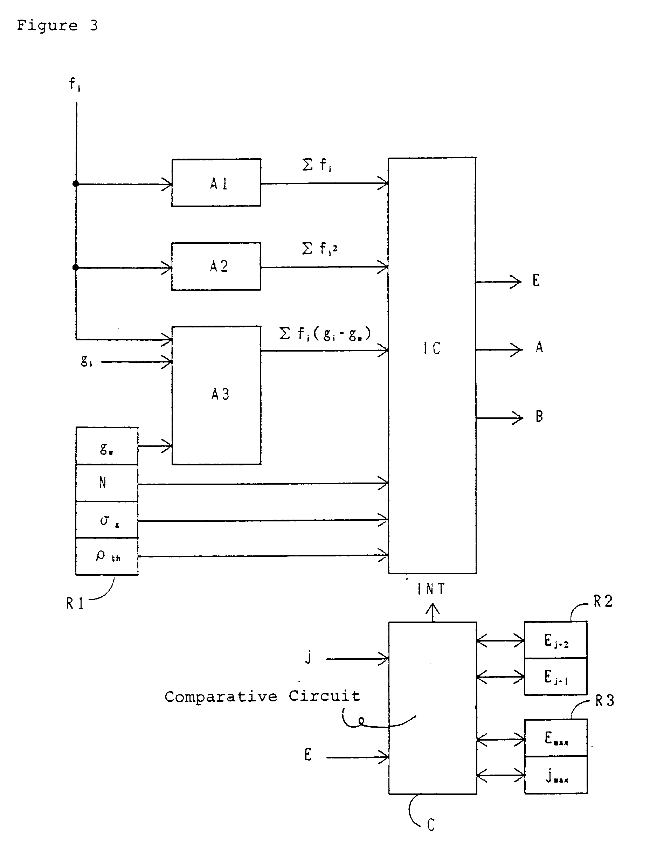

The pattern matching circuit is constructed as shown in Figure 3, and has the first integrating means A1, the second integrating means A2 and the third integrating means A3, a pixel data of an input image fᵢ is inputted to each means.

The first integrating means A1 calculates the integrating value 'Σfᵢ' of the pixel data fᵢ. Here, in order to process the whole image data once, a large amount of high speed memories are needed, and generally, a part of an image data is processed, for example taking 16 pixels step by step. In this case, the first integrating means A1 operates this integration of 16 pixels, as shown in Formula 2. 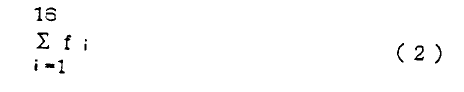
For example, when the size of a template TM is $\text{m x n = N}$ , the integration of Formula 3 is necessary. 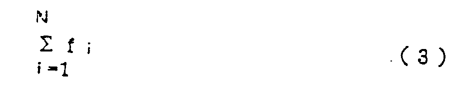
The integrating result of the Formula 2 is preserved and finally obtains a result of Formula 3 after integrating the same integrating result in the following processings.

The second integrating means A2 calculates the integrating value 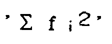
of squared pixel data fᵢ. Similar to the Formula 2, a part of the image data, such as successive 16 pixels are inputted to be processed. The second integrating means A2 integrates 16 pixels, as shown in Formula 4. 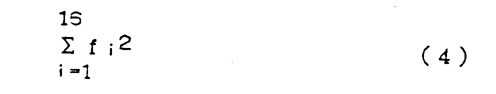
For the template size $\text{m x n = N}$ pixels, the integrating result of Formula 4 is preserved and obtains the result of Formula 5 finally after integrating the similar integration results, in executing Formula 5. 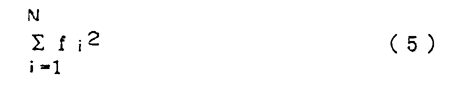
The third integrating means A3 calculates an integration value Σfᵢ(gᵢ-gₘ) of an image data fᵢ and a deviation of template data (gᵢ-gₘ). Similarly to Formula 2, 16 pixels are successively taken, a part of an image data is taken and processed.

The third integrating means A3 calculates an integration of this 16 pixels, that is Formula 6. 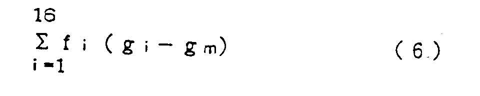
For a template size $\text{m X n = N}$ pixels, for performing integration of Formula 7, 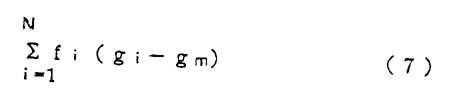
the integrating result of Formula 6 is preserved and a result of Formula 7 is finally obtained after integrating the similar integration results.

Here, when Formula 8 and Formula 9 are provided, 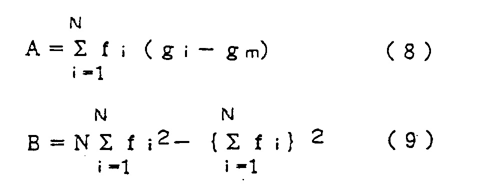
a correlation coefficient ρ is calculated as shown in Formula 10.

${\text{ρ = NA/(σ}}_{\text{g}} \text{√B) (10)}$

σ_{g} is a deviation value of a template image.

It is necessary to perform division to calculate a correlation coefficient, but it is generally impossible for hardware to perform division in high speed. Then Formula 10 is rewritten as follows, Formula 11.

$\text{E = N²A²-κB (11)}$

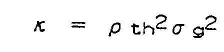

ρₜₕ is a threshold value of a correlation coefficient.

An allowable minimum value of the correlation coefficient ρ is set up, and a denominate and a numerator are compared based on the value. Here, (N²A²) is a squared numerator and κB is a square denominator multiplied by

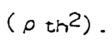

Outputs from the first integrating means to the third one are inputted into the total operating means IC, and E of Formula 11 is calculated here. The total operating means IC is connected to gₘ, N, σ_{g} which can be calculated beforehand and for registering a register R1 for registering ρₜₕ which is beforhand set up, and E is calculated with referring to these data.

An output E of the total integrating means IC and the number j showing the number of times of pattern matching (a position of a search areas) are inputted to a comparative circuit C, and the comparative circuit C compares a value of E in successive 3 search areas (here they are described as Eⱼ₋₂, Eⱼ₋₁ and Eⱼ). When Eⱼ₋₂ ≦ Eⱼ₋₁ and Eⱼ ≦ Eⱼ₋₁, then Eⱼ₋₁ is deemed as the maximum value. When a few areas should be abstracted, the operation is stopped once because of possibility to omit the following operations by performing evaluation in each maximum value (precise pattern matching by ρ calculation etc.). For performing this processing, register R2 is set up to preserve Eⱼ₋₂ and Eⱼ₋₁. When operation is stopped, the comparative circuit C outputs a stop signal INT to each computational module.

Calculating the maximum value of E in search areas of a predetermined number, Register 3 is provided for preserving the maximum value and a position of the maximum value in the case of evaluating the maximum value.

If ρₜₕ is suitable, the maximum value of E is generated close to the maximum value of a correlation coefficient and a part of input image is extracted substantially coincident with the template image. Only from this rough matching, final judgment can be performed, that is, a judgment is performed if a part exists coincident to the template or not and where the coincidence occurs. In order to perform more detailed pattern matching, searching neighboring areas of the maximum value of E, ρ is calculated by the Formula 10, and the maximum value of ρ and its value are calculated. For calculating Formula 10, the outputs from a pattern matching circuits A and B are inputted to a LSI with divisional function, such as CPC.

Grasping roughly a position of the maximum value of a correlation coefficient without division and calculating in detail of the correlation coefficient corresponding to the necessity, simple circuit and the circuit is comparatively simple and high speed processing is realized.

As mentioned above, a pattern matching circuit according to this invention has a threshold value of a correlation coefficient and evaluates Formula 2 (N is a number of input data, fᵢ is an input data, fₘ is a mean value of input data, gᵢ is a template data, gₘ is a mean value of template data, ρₜₕ is a threshold value of a correlation function. σ_{f} is a standard deviation of input data, σ_{g} is a standard deviation of template data) in a range over threshold value.

## Claims

1. A pattern matching circuit comprising the first integrating means calculating a sum 'Σfᵢ' of input data fᵢ, the second integrating means calculating a sum 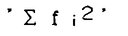 of squared input data, the third integrating means calculating a sum 'Σfᵢ(gᵢ-gₘ)' of product fᵢ(gᵢ-gₘ) of a deviation (gᵢ-gₘ) corresponding to a mean gₘ of a template data gᵢ, and an input data fᵢ, a register registering a number of input data 'N', a mean of template data 'gₘ', a standard deviation of template data 'σ_{g}' and a threshold value 'ρₜₕ' of correlation coefficient ρ, and a total operational means calculating the following formula:

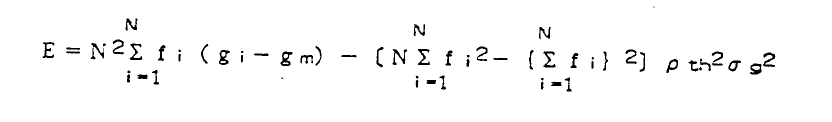

2. A pattern matching circuit as claimed in Claim 1, further comprising a comparative circuit for stopping said operation when a positive local maximum value of E is occured and for outputting a signal showing said maximum value.
